Europäisches Patentamt

European Patent Office

Office européen des brevets

(11) Publication number: **0 428 079 A2**

# EUROPEAN PATENT APPLICATION

(21) Application number: 90121481.7

(51) Int. Cl.5: **G06F 12/10**

(22) Date of filing: 09.11.90

(30) Priority: 13.11.89 US 436384

(43) Date of publication of application:
22.05.91 Bulletin 91/21

(84) Designated Contracting States:
AT BE CH DE ES FR GB GR IT LI LU NL SE

(71) Applicant: ROSS TECHNOLOGY, INC.
7748 Highway 290, West Suite 400
Austin, Texas 78736(US)

(72) Inventor: Anantakotiraju, Vagesna
3503-A Leafield
Austin, Texas 78749(US)

Inventor: Dobbs, Carl S.
6105 Smith Oak Trail
Austin, Texas 78749(US)
Inventor: Carmean, Douglas M.
14815 South West Bonnie Brae
Beaverton, Oregon 97005(US)
Inventor: Tinker, Carrell
2611 Bee Caves Road No. 351
Austin, Texas 78749(US)

(74) Representative: UEXKÜLL & STOLBERG
Patentanwälte
Beselerstrasse 4
W-2000 Hamburg 52(DE)

(54) Translation look aside buffer with parallel exception checking and update bypass.

(57) An apparatus and method for translating virtual addresses to physical addresses of a main memory is disclosed. The main memory includes a plurality of pages, each page of memory corresponds to a page address. The virtual addresses are stored in a content addressable memory. The content addressable memory includes a plurality of entries and each entry contains one of the virtual addresses. The random access memory includes a plurality of entries and each entry of the random access memory contains one of the page addresses and associated with each page address is access privilege information. The access privilege information denotes the level of authorization required for accessing the page associated with the requested page address from main memory. Each entry of the random access memory corresponds to an entry of the content addressable memory. Associated with each entry of the content addressable memory and associated with each corresponding entry of the random access memory is a means for performing a predetermined logic function for comparing said access privilege for one of said pages of said main memory with access privilege for the request and determining whether the requested access privilege is sufficient for accessing the page of main memory.

FIG. 4a.

# TRANSLATION LOOK ASIDE BUFFER WITH PARALLEL EXCEPTION CHECKING AND UPDATE BYPASS

## Field of the Invention

The present invention relates to memory management units ("MMUs") and, more particularly to, translation look aside buffers ("TLBs") which are included within the MMUs. MMUs provide computers with the ability for multiple tasking and/or multiple users to share the same memory array. TLBs are used for converting virtual addresses of the main memory to physical addresses of the main memory and for ensuring that the multiple users and/or the multiple tasks do not access the same physical locations (i.e. pages) of the main memory. The present invention is particularly directed to the architectural arrangement and operation of the components which make up the TLB. One aspect of architectural arrangement of the invention minimizes the time for accessing physical addresses from the TLB while ensuring that the multiple users and/or multiple tasks do not access the same pages of main memory.

## Background of the Invention

The MMU takes virtual addresses provided from the computer system's central processor and translates these virtual addresses into physical addresses for the purpose of locating information in the system's main memory. Translating the virtual addresses into physical addresses is typically called mapping. The MMU provides protection between tasks and/or users to ensure that the tasks and/or users do not encroach on each other's respective portion of the main memory. The MMU ensures that the tasks/users access only those areas in the main memory for which they have proper access authorization. The function of the TLB in an MMU is for storing the most recent virtual address to physical address translations (mappings). The TLB is often referred to as an address translation cache because it is a cache memory of virtual to physical address translations that will be used over time to ensure that multiple users and/or multiple tasks do not use the same locations in the main memory.

"Exceptions" occur when a task and/or user attempt to access an area of main memory for which it does not have proper access privilege (i.e. authorization). Exception checking logic is typically built into the TLB to determine the access privilege for each page of memory mapped in the MMU. The privileges include "read", "write" and "execute" permission for both "user" and "supervisor" spaces in main memory. User tasks by definition cannot access all of the computer's resources for security purposes. However, supervisor tasks are able to access all of the computer's resources. Supervisor status is only given to those tasks and/or users which require such capability.

As translation requests are received by the TLB, it is not sufficient to determine if the virtual to physical address translation exists in the TLB. The TLB must also determine if the access privileges for the requested page of memory (corresponding to the requested page address) matches the access privilege of the requesting task and/or user. If an access privilege is violated "exception" processing is initiated. The TLB produces "exception" flags ("privileged or protected") thereby alerting other control logic of the computer that an exception has occurred.

Virtual address translations by the conventional TLBs consume approximately one clock cycle assuming that the requested virtual address to physical address mapping is already within the TLB memory storage (i.e., if a load instruction is seen in cycle i, the physical address is is available to the computer system in cycle $i+1$). The translation operation of the TLB is a critical path or limiting factor on the system's ability to shorten the clock cycle period of the system. Therefore if the translation time required by the TLB could be reduced, the time for each clock cycle of the system can be reduced and overall system performance would be enhanced.

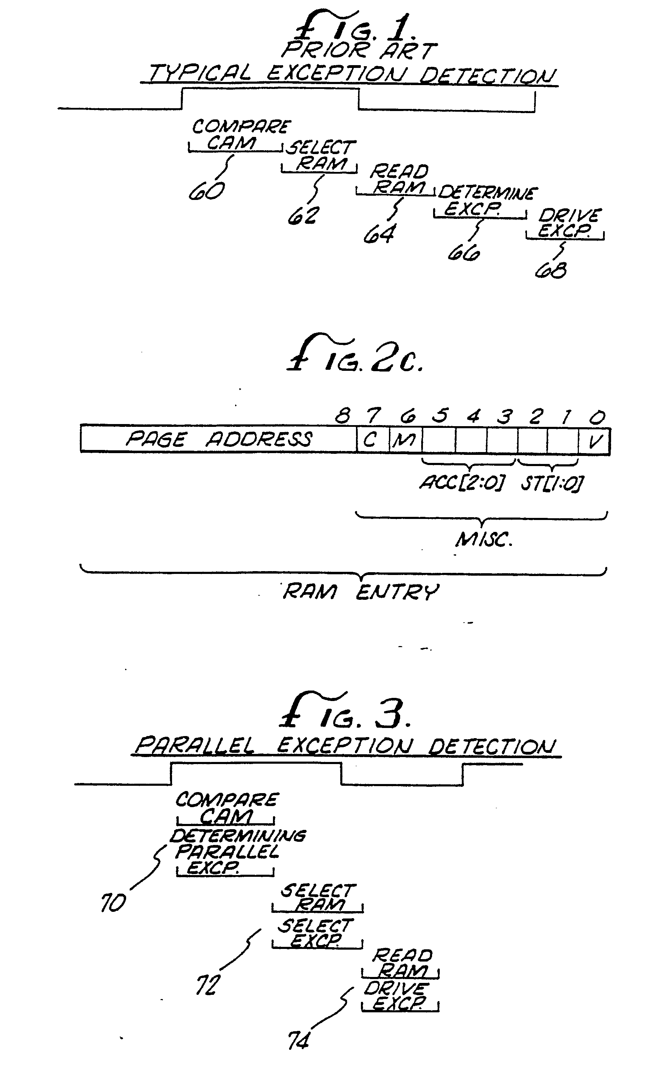

As shown in Fig. 1, a typical clock cycle for accessing a virtual address to physical address mapping in a conventional TLB requires the following four steps: 1) compare the input virtual address with each entry of the content addressable memory ("CAM"); 2) select a corresponding page address entry in the random access memory ("RAM"); 3) read the page address along with the control and access information out of RAM, and 4) determine the exception or privilege authorization of the present request using the information obtained during step 3. The architecture of the prior art TLBs (as shown in Fig. 2(a)) constrains the TLBs' ability to efficiently obtain the translations by requiring the TLB to process the steps described above in a serial fashion. A more detailed discussion regarding prior art TLBs and their operation is disclosed in the detailed description section of this specification.

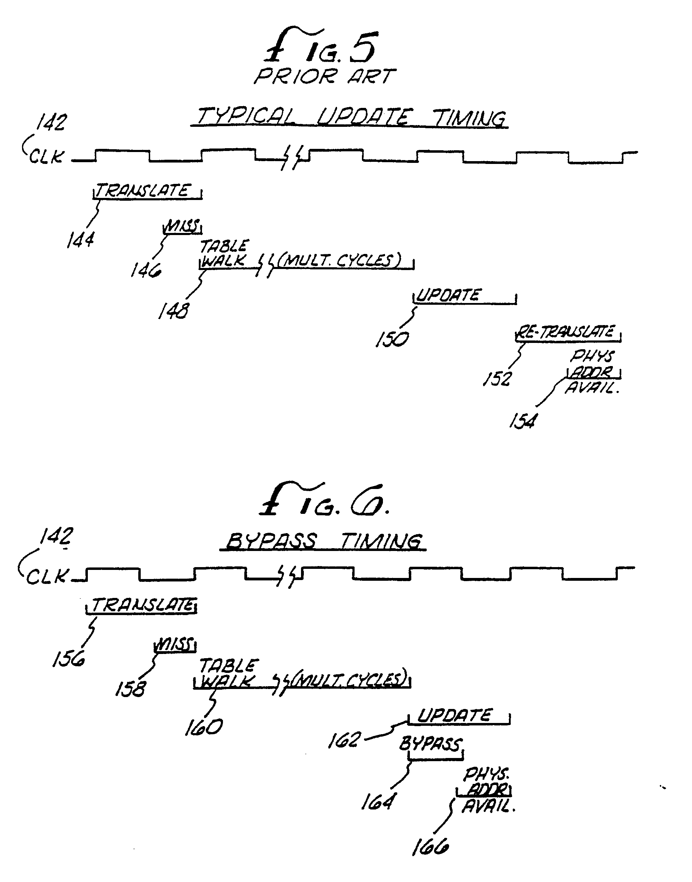

An additional limitation with the prior art TLB architectures occurs when "misses" cause the MMU to obtain the requested translation information from main memory. Referring to Fig. 5, a typical timing diagram is shown for situations involving misses in MMUs having conventional TLBs. After a replacement algorithm performs a "table walk" through the main memory in order to obtain new entries for the RAM and CAM, the virtual address and page address are updated to the CAM and RAM respectively. Then in one clock cycle the TLB performs a retranslation to obtain the physical address corresponding to the original virtual address translation requested. The architecture of the conventional TLB requires the TLB to update the memories (i.e. RAM and CAM) of the TLB and then retranslate the virtual address in order to obtain the requested physical address. If the physical addresses could be provided without having to perform the update and retranslation steps each time a miss occurs, then an entire clock cycle of processing could be saved.

Summary of the Invention

The present invention seeks to provide a method and apparatus that reduces or eliminates the disadvantages referred to above with regard to the prior art.

Briefly, a preferred embodiment of the invention includes an apparatus for translating virtual addresses to physical addresses of the main memory. The main memory includes a plurality of pages and each page of the main memory corresponds to a page address. The apparatus also determines whether the request for translation has sufficient access privilege to access the page associated with said page address. The preferred embodiment of the invention includes the following elements.

A content addressable memory for storing a plurality of the virtual addresses which have been currently accessed by the apparatus. The content addressable memory includes a plurality of entries and each entry contains one of the virtual addresses.

A random access memory for storing a plurality of page addresses. The random access memory includes a plurality of entries and each entry of the random access memory contains one of the addresses and access privilege information associated with the page address. The access privilege information denotes the level of access privilege required for obtaining the corresponding page from main memory. Each entry of the random access memory corresponds to an entry of the content addressable memory.

Associated with each entry of the content addressable memory and each corresponding entry of the random access memory is a means for performing a certain predetermined logic function. The predetermined logic function compares the access privilege for one of said pages of the main memory with the request access privilege for determining whether the requested access privilege is sufficient for accessing the page associated with the page address.

The preferred embodiment of the invention also includes means for combining the page address with the virtual address to obtain the physical address, and means for obtaining in parallel to the means for obtaining said physical address, the determination of whether the requested access privilege is sufficient for accessing the page.

The preferred embodiment of the invention also includes a method for translating virtual addresses to physical addresses of the main memory. The method includes the following steps.

The contents of the content addressable memory are compared with the virtual address to be translated in order to determine which entry of the content addressable memory, if any, matches the virtual address.

In parallel with the step of comparing the contents of the content addressable memory with the virtual address is a step for obtaining the access privilege information associated with each entry of the random access memory. The step for obtaining the access privilege information including the step of comparing the access privilege for each of the entries with the requested access privilege for determining whether the requested access privilege is sufficient for accessing the page associated with the page address.

The next step involves selecting a random access memory entry associated with the matched entry of the content addressable memory. In parallel to the step of selecting the random access memory entry is the step of selecting the means for performing the predetermined logic function associated with the matched entry of the content addressable memory and the corresponding page address of the random access memory.

The last step requires combining the page address with the virtual address to obtain the physical address, in parallel to the step of combining, obtaining from the selected predetermined logic function the determination of whether the requested access privilege is sufficient for accessing the page.

The preferred embodiment of the invention also includes a translation look aside buffer for efficiently providing translation for a virtual address to a physical address of a main memory. The translation look aside buffer includes the following elements, a content addressable memory for storing a plurality of the virtual addresses, a random access memory for storing a plurality of the page addresses, a virtual address bus for updating the content addressable memory with the virtual addresses and an update data bus for updating the random access memory with the page addresses.

The virtual address bus and the update data bus combined by an output multiplexer. The output multiplexer combines the page address with the virtual address to produce said physical address.

## Brief Description of the Drawings

Fig. 1 represents the translation operations performed in serial by conventional TLBs;

Fig. 2(a) represents an architectural schematic of the prior art TLBs;

Fig. 2(b) depicts the Decode/Hit control components associated with each entry of the RAM and CAM of the conventional TLB depicted in Fig. 2(a);

Fig. 2(c) represents an entry of the RAM depicted in Fig. 2(a);

Fig. 3 depicts one clock cycle of operations performed in parallel by a TLB according to the present invention;

Fig. 4(a) depicts the architectural schematic of a TLB according to the present invention;

Fig. 4(b) depicts the Exception/Decode/Hit control components associated with each entry of the RAM and CAM according to the present invention;

Fig. 5 depicts a timing diagram of a conventional TLB performing an update and retranslation steps when a translation miss occurs;

Fig. 6 depicts a timing diagram for updating a TLB which includes a bypass mechanism (shown in Fig. 4(a)) for accessing the requested page address in parallel to updating the TLS, according to the present invention.

## Detailed Description

### I. Conventional TLBs

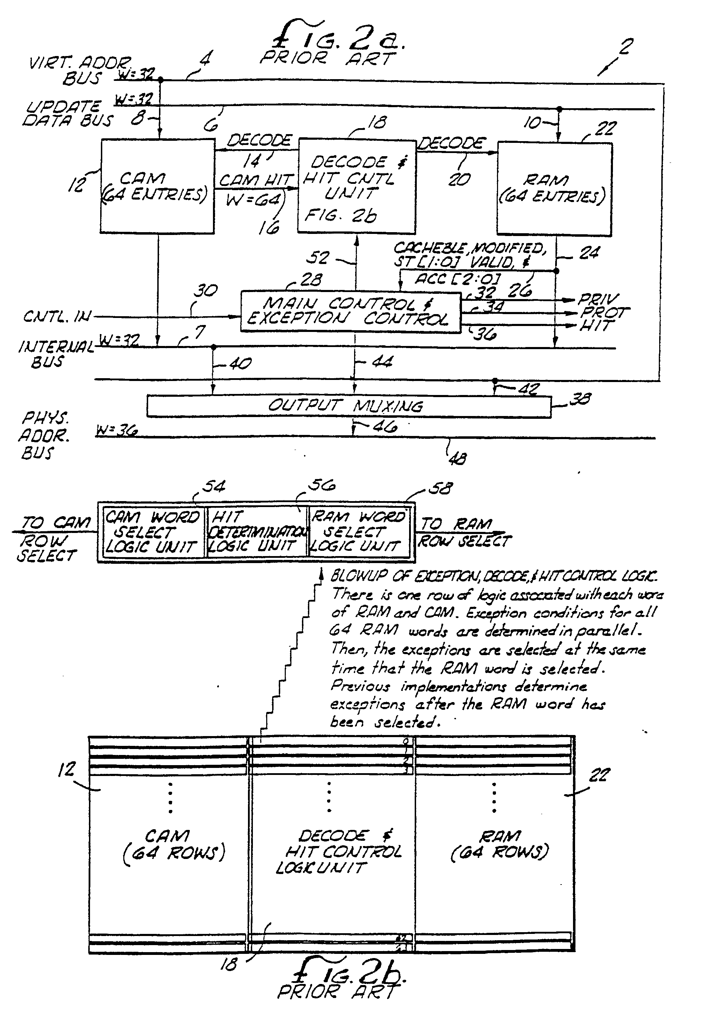

Referring to Figs. 1, 2(a), 2(b) and 2(c) a more detailed description regarding prior art TLBs is now described. Fig. 1 represents a typical translation performed by a conventional TLB requiring at least one clock cycle to obtain the physical address and exception information associated with the requested physical address. The steps performed by the prior art TLB occur in a serial fashion as shown in Fig. 1. Fig. 2(a) is a detailed architectural schematic of the prior art TLB.

The TLB shown in Fig. 2(a) contains four significant buses including a Virtual Address Bus 4, an Update Databus 6, an Internal Bus 7 and a Physical Address Bus 48. The TLB also contains a CAM 12, a Decode/Hit Control block 18, a RAM 22, an Output MUX 38, and Main Control/Exception block 28.

When a memory translation is requested, the virtual address is transferred over bus 4 and bus 8 and drives CAM 12. The virtual address is thirty two bits wide and each of the sixty four entries of CAM 12 is thirty two bits wide. When the virtual address drives the bit lines of CAM 12, each entry of CAM 12 is compared with the input virtual address. If a match is found in the TLB a corresponding bit in a sixty-four bit CAM "hit word" is set and transferred over bus 16 to the Decode/Hit Control block 18. A more detailed description regarding the Decode/Hit Control block 18 is later discussed with reference to Fig. 2(b).

The Hit Control Logic of block 15 evaluates the sixty four bit word to determine whether a hit has occurred. Only one match, if any, can occur in the CAM 12. If no "hit" (i.e. no match) occurred then no bits in the word are set; a "miss" has occurred (see Section 11(c)). Assuming that a hit has occurred then an entry in the RAM 22 corresponding to the set bit of the hit word is selected. A decode signal 20 is sent from the Decode Logic of block 18 to RAM 22. The RAM entry corresponding to the set bit in the hit word is read from RAM 22. RAM 22 contains sixty four entries and each entry corresponds to an entry in CAM 12. Each entry of RAM 22 contains a thirty two bit word; for example, twenty four bits of the word comprise the page address and the remaining eight bits contain other miscellaneous information (including control and access privilege information) for performing exception logic functions at the Main Control unit 28. Referring to Fig. 2(c) a typical RAM entry is shown. The designation for the bits within the word are explained further with reference to Table 1 below.

After the particular entry of the RAM 22 has been selected, twenty four bits of the entry are transferred from the RAM 22 over bus 24 to drive the internal bus 7. The remaining eight bits shown in Fig. 2 are sent over bus 26 to the exception logic contained in the Main Control block 28.

Table 1 below further explains the purpose of the eight miscellaneous bits and depicts the access

4

privileges evaluated by the exception logic 28.

TABLE 1

| C - Cacheable bit - indicates if entry will use cache RAM; |
|---|
| M - Modified bit - indicates if entry has been modified; |
| ACC [2:0] - page access level protection: |

| [2:0] | User | Supervisor |
|---|---|---|
| 0 | Read only | Read only |
| 1 | Read/Write | Read/Write |
| 2 | Read/Execute | Read/Execute |
| 3 | Read/Write/Execute | Read/Write/Execute |
| 4 | Execute only | Execute only |
| 5 | Read only | Read/Write |
| 6 | No Access | Read/Execute |
| 7 | No Access | Read/Write/Execute |

| ST [1:0] - controls mapping size; |
|---|
| V - Valid bit - indicates if RAM word is valid. |

The "C" cacheable bit is a control bit which designates whether the information on the page is cacheable. The "M" modified bit is also a control bit which indicates whether the page has been modified. This bit enables the operating system to discard the page if it has not been modified. The entries contain the cacheable and modified bits to enable the Main Control 28 to make decisions about which page should be swapped out of memory. For example, the modified flag is used to determine whether the page actually needs to be copied out, or whether it can be just overwritten. The ("ACC [2:0]) bits are three access privilege bits for representing eight binary access privilege designations ("ACC [2:0])) which depict the type of access privilege this segment of memory has for a user or a supervisor. Three bits depict one of eight binary numbers and each binary number represents a different condition for either a user or supervisor. The information in the access table is compared with request access privilege information which comes in over the control line input 30 to the Main Control unit 28 in the form of a multiple bit control word. The input control word comprises at least four bits for designating the access privilege type of the requested operation; one bit represents a write request, a second bit represents a read request, a third bit indicates an execute instruction and a fourth bit indicates supervisor or user control. When the supervisor/user bit is set, the first, second and third bits are associated with a supervisor request. Conversely, if the supervisor/user bit is not set then the first, second and third bits are associated with a user request.

The access privilege table (ACC[2:0]) indicates the logic evaluated by the exception logic of the Main Control 28. For example, if the control input indicates that a user is requesting a write operation and the access ACC[2:0] bits are set to a binary 0 (i.e. "000") a read only is granted and a protection violation occurs. Line 34 which is output from the exception control logic of the Main Unit 28 is set high.

Privilege violations occur over line 32 when a user requests a page of memory which is currently controlled by the supervisor. For example, if the control input indicates that a user will perform a write operation and the access ACC[2:0] bits are set to a binary six or seven (i.e. "110", "111") then "no access" is granted and a privilege violation occurs. Line 32 which is output from the exception logic of the Main Control 28 is set high.

The "V" (Valid) flag is a control bit which indicates, if set, that the entry is valid; if clear, the entry is invalid and a TLB miss occurs (thus, an operating system may use this bit to indicate that a particular page translation is no longer valid). When a computer system is turned on, it "flushes" all of the entries of the TLB by clearing the valid bit for each entry. In this way all of the entries of the RAM do not have to be set to zero in order to indicate the initial flushed state.

ST [1:0] bits are also control bits which denote the size of a page; 4K bytes, 256K bytes, 16M byte, and 4G bytes. A 4K byte page in contrast to the page size of a VAX architecture (which has 512 bytes) is quite large. A primary reason for having large page sizes is due to current trends in memory and I/O technology.

Because the system is uses "paging" (swapping of pages between main memory and I/O devices on demand), the actual page size depends on the memory size, the access time of the device (e.g., disk) used to hold the swapped out pages, and band width (data rate) of transfers between the device and memory. Due to the trend for having larger memory sizes, longer access or seek times (relative to memory access times), and higher I/O band widths, a necessity for having larger page sizes has occurred.

More importantly, for a TLB of a given size, the larger the page size, the more address space can be covered by the TLB. For instance, if the page size is 512 bytes, a sixty four-entry TLB maps only 32K bytes of the address space. If the page size is 4,096 bytes, then the TLB maps 256K bytes of the address space.

After a page address has been read from the RAM 22 and drives the internal bus 7, it is transferred over bus 40 to Output MUX 38. The original input virtual address is transferred over bus 4 to Output MUX 38 via bus 42. Main Control 28 controls the Output MUX 38 via line 44 and "muxes" the upper 24 bits of the page address to the lower 12 bits of the virtual address to form a physical address (36 bits long). (This particular configuration of the page address is for a 4K byte pages. For purposes of this disclosure, it is assumed that all references to the page address will be for page having 4K bytes.) After the physical address is constructed, the Output MUX 38 transfers the resulting physical address over bus 46 to drive the Physical Address Bus 48. The Physical Address Bus 48 is connected to the logic of the computer system which requested the original translation of the input virtual address to occur. If access privileges are violated, the computer system will perform exception processing to determine if the privilege violation is allowable.

Referring now to figure 2(b), a more detailed discussion regarding the contents of the Decode/Hit Control unit 18 is shown. More particularly, each entry of the CAM 12 and each corresponding entry in RAM 22 is shown associated with as entry in the Decode/Hit Control unit 18. Each of the sixty four entries in the Decode/Hit Control unit 18 contains a CAM Word Selection Logic Unit 54, a Hit Determination Unit 56 and a RAM Word Selection Unit 58. Note that there is no exception logic in the Decode/Hit Control Unit 18.

The CAM Word Selection Unit 54 determines which row in CAM 12 will be read or written over for diagnostic and updating purposes. The Hit Determination Unit 56 interprets the sixty four bit hit word from the CAM 12 to determine which entry of the CAM 12 matches the input virtual address. If a bit is set in the sixty four bit hit word, then the Hit Determination Unit 56 indicates that a match has been found and outputs a signal denoting that a hit has occurred. Conversely, if no match is found, a signal denoting that no hit has occurred is output. The RAM Word Selection Logic unit 58 determines which entry of RAM 22 will be read or written over for diagnostic and updating purposes. Additionally, the RAM Word Selection Unit 58 decodes which entry of RAM 22 corresponds to the matched entry of the sixty four bit hit word. For example if the Hit Determination Unit 56 determines that a hit has occurred in the tenth entry of the CAM 12, then perhaps the tenth entry of the RAM 22 would be selected and read out by the RAM Word Selection Unit 58.

The following paragraph is a summary of the steps performed by conventional TLBs during a translation operation. Returning to Figure 1 the steps performed (in a serial fashion) by the prior art TLB shown in Figures 2(a), 2(b) and 2(c) are now discussed in more detail. The first step 60 (Fig. 1) compares the input virtual address with the contents of the CAM 12 (Fig. 2(a)). CAM 12 (Fig. 2(a)) outputs the sixty four bit hit word over bus 16 (Fig. 2(a)) to the Decode/Hit Control block 18 (Fig. 2(a) and2(b)). In the second step 62 (Fig. 1) the Decode/Hit Control block 18 selects the particular RAM entry of RAM 22 (Fig. 2(a)) to be read. In the third step 64 (Fig. 1), the selected entry of RAM 22 (Fig. 2(a)) is read from RAM 22 (Fig. 2(a)) to drive buses 24 and 26 (Fig. 2(a)) and the physical address is constructed. Next, in the fourth step 66 (Fig. 1), the exception logic of Main Control 28 (Fig. 2(a)) determines the authorization or exception associated with the page address read from RAM 22 (Fig. 2(a)). When the access authorization has been determined, one full clock cycle will have lapsed. Then in step 68, (Fig. 1) the exception logic of the Main Control 28 drives the authorization or exception information to the logic of the computer system in the next clock cycle.

II. Preferred Embodiment of the Invention

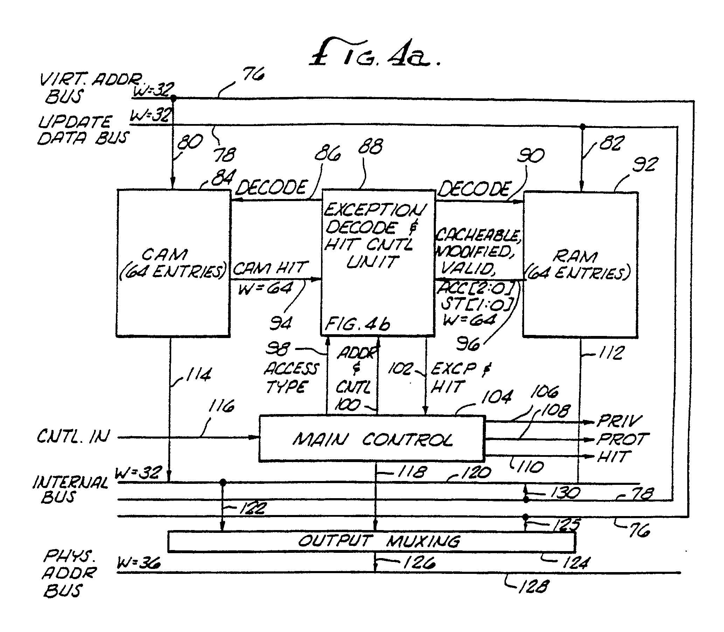

A. Summary of Parallel Exception Processing (Fig. 3)

Referring to Figure 1 and 3, a summary of the parallel operations performed by the preferred embodiment of the invention is now discussed. Note that the clock cycle period for accessing the TLB is reduced in comparison with the clock cycle of the conventional TLB shown in Fig. 1. It is envisioned that the preferred embodiment cycle will reduce the clock cycle period by approximately 2 to 3 nanoseconds thereby reducing the overall clock cycle from 27 nanoseconds to approximately 25 nanoseconds.

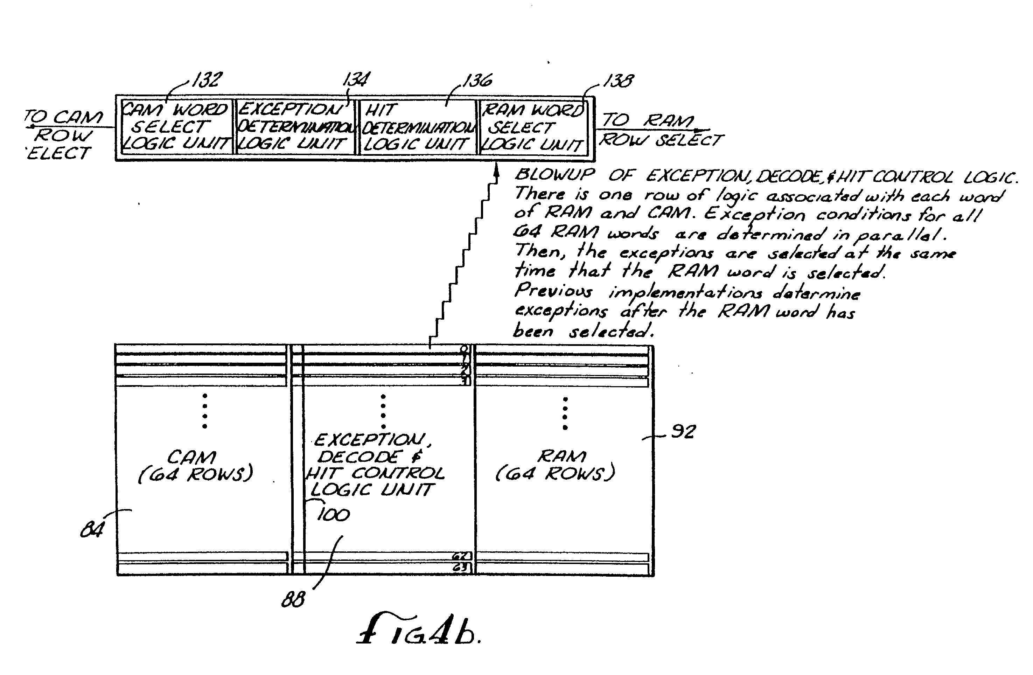

Briefly referring to Figs. 3 and 4(a) in the preferred embodiment the request for a virtual to physical address translation occurs in the same way the prior art requests a virtual to physical address translation. However, in the first step 70 (Fig. 3) of the translation, the access privilege information (in parallel) is also driven directly from every entry of the RAM 92 (Fig. 4(a)) into exception logic (Exception/Decode/Hit Control Unit 88) which is now located between CAM 84 and the RAM 92 as shown in Fig. 4(b) (a more detailed discussion of Figs. 4(a) and 4(b) is provided shortly). Each of the sixty four entries of the RAM 92 and CAM 84 have associated exception logic which compares the access privilege allowed for the particular entry of RAM 92, to the access privilege requested by the user or supervisor. The step for determining authorization or exception (70, Fig. 3) occurs in parallel to the search for the virtual address match in CAM 84 (70, Fig. 3) and the step for determining the exception or authorization for each entry of the RAM 92 is completed by the time a match, if any, in the CAM 84 is determined. Assuming that a match is found, a corresponding bit in a sixty-four bit hit word is set. The particular RAM entry associated with the set bit is selected (72, Fig. 3) and in parallel the particular exception logic entry of the Exception/Decode/Hit Control Unit 88 (Fig. 4(A)) is selected as well. In step 74 (Fig. 3) the page address is read from the RAM 92 the physical address is constructed and the exception or authorization calculated by the exception logic is simultaneously output. If access privileges are violated, the computer system will perform exception processing to determine if the privilege violation is allowable.

By exploiting parallelism, the preferred embodiment can deliver faster access times to the TLB and thus reduce a critical timing path in the device. The result is a corresponding shortening of the clock cycle (i.e. 27 nanoseconds to approximately 25 nanoseconds) and overall performance enhancement to the computer system.

B. Detailed Description of Parallel Exception processing (Fig. 4(a))

Referring to Figs. 2(a), 2(b), 2(c), 4(a), and 4(b) a more detailed discussion regarding the preferred embodiment of the invention is now discussed. Figs. 2(a) and 4(a) appear similar, however, the exception logic located in Main Control 28 of Fig.2(a) has been strategically replicated sixty-four times (Fig. 4(a)) in the Exception/Decode/Hit Control block 88 (Figs. 4(a) and 4(b)); one entry corresponding for each entry of the CAM 84 (Fig. 4) and RAM 92. For a more direct comparison, refer to Fig. 2(b) and Fig. 4(b). Each row of the Decode/Hit Control unit 18 of Fig. 2(b) of the conventional TLB now includes an Exception Logic Unit 134 (Fig. 4(b)).

The operation of the preferred embodiment TLB architecture shown in Fig. 4(a) and the performance improvement over prior art TLB is now discussed in more detail. When a translation request of a virtual address to a physical address occurs, the virtual address is transferred over bus 76 and bus 80 to CAM 84. The preferred embodiment of the invention contains sixty four entries in the CAM 84 and each entry contains a thirty two bit word. In parallel (i.e. simultaneously) to comparing the contents of the CAM 84, the exception logic associated with each entry of the CAM 84, determines the access privilege for each entry of the RAM 92 by performing logic which evaluates TABLE 1 (described in the prior art section). More particularly, the exception logic for each entry determines whether the access privilege allowed for the entry is violated by the access privilege requested by the control input over line 116 (Figs. 4(a) and 4(b)) the Main Control 104 (of the multiple bit word). The control input 116 (Fig. 4(a)) to the Main Control designates in one of four bits whether there is a write request, a read request, an execute request, and whether read, write or execute requests are requested by either the supervisor or user. These requests are compared with the access privilege information obtained for each entry of the RAM 92. Recall that the privilege information is conventionally contained in the ACC [2:0] bits of each entry of the RAM 92.

By the time a match is found in the CAM 84 the exception logic corresponding to each entry of the RAM 92 will have completed its comparison of the access requested to the access allowed. This process occurs in parallel for all of the exception logic entries of the Exception/Decode/Hit Control Unit 88. Assuming that a hit is found in the CAM 84, the corresponding bit of the sixty four bit hit word will be set and the hit word will be sent over bus 94 to the hit determination logic of the Exception/Decode/Hit Control Unit 88. The Hit Determination Unit 136 (Fig. 4(b)) will select which entry of the RAM 92 corresponds to the matched entry of the CAM 84 and in parallel select the entry of exception logic 134 (Fig. 4(b)) corresponding to the mapped entries of the CAM 84 and RAM 92.

Next the RAM Word Select Unit 138 (Fig. 4(b)) of the selected entry of the Exception/Decode/Hit Control Unit 88 will send a read signal to the RAM 92 to read the page address from the selected entry of the RAM 92. While the page address is read from RAM 92, the exception or authorization determination is

7

output over bus 102 to the main control unit 104. If a privilege violation has occurred the violation will be output over bus 106 and/or 108 to designate to the outside logic that a user/supervisor privilege violation and/or a read or write protection violation occurred. The computer system will determine how to process the violation.

The page address obtained from RAM 92 is output over bus 112 and drives the Internal Bus 120. The contents of the Internal Bus 120 are then transferred to the Output MUX 124 via bus 122. There the lower order 12 bits of the virtual address are MUXED together with the higher order 24 bits of the page address and the physical address (36-bits) is output over line 126 to drive the Physical Address Bus 128. The above described operation for translating the virtual address to the physical address is one clock cycle long.

## C. Bypassing Retranslation Function

### 1.) Conventional TLB Translation "Misses"

Referring to Figs. 2(a) and 5, the procedure for performing an update to the CAM 12 and RAM 22 for conventional TLBs when translation misses occur is now discussed. Referring to Fig. 5 the typical implementation of the TLB will work as follows. A virtual address is generated by the central processor (not shown) of the computer for translation by the TLB. The virtual address is transferred over buses 4 and 8 to CAM 12 of the TLB (Fig. 2(a)). During step 144, the virtual address is compared with each entry of the CAM 12 (shown as one clock cycle in Fig. 5). If the virtual address is not found within CAM 12 (Fig. 2(a)) (that is the CAM 12 does not contain the virtual address that is requested), a "miss" condition is signaled by the TLB (146, Fig. 5).

More particularly, the sixty-four bit hit word transferred over line 16 (Fig. 2(a)) to the Decode/Hit Control Unit 18 indicates that no matches have been found and thus no physical address can be supplied by the TLB. In this situation logic, not shown in Fig. 2(a) performs a function called a "table walk" whereby the main memory (not shown) of the computer system is searched for the virtual to physical address mapping that was originally requested (148, Fig. 5).

Misses occur because the TLB can only store a limited amount of virtual to physical address mappings. The mappings that do not fit into the TLB are stored in the main memory in page tables and can be accessed during the table walk performed by the MMU of the computer system (148, Fig. 5).

Once the virtual to physical address mapping has been found in the main memory, the mapping is updated into the CAM 12 and RAM 22 of the TLB. More particularly, the MMU performs a read operation from the main memory and transfers the translation mapping onto the Virtual Address Bus 4 (i.e. virtual address) and on to the Update Data Bus 6 (i.e. page address and the miscellaneous bits). At this time an update to the CAM 12 and RAM 22 is requested by Main Control 28 (Fig. 2(a)). The update is performed by writing the newly retrieved virtual address and page address into designated locations of the CAM 12 and RAM 22. The Main Control 28 determines which entries of the CAM 12 and RAM 22 will be replaced with the new information. Main Control 28 initiates the write operation by sending the address over bus 52 to the Decode/Hit Control Unit 18 which coordinates the write operations for the CAM 12 and RAM 22. At this time, the virtual to physical address translation is requested again (152, Fig 5). CAM 12 now contains the virtual address which corresponds to the originally requested virtual address translation. Additionally, the corresponding page address has been stored in the RAM 22. Now when the comparison in the CAM 12 occurs a match will be found and the appropriate bit of the hit word will be set. The translation is performed and the physical address is supplied to the Physical Address Bus 48 via buses 24, 7 and 44 (154, Fig. 5).

### 2.) Bypass Function of the Preferred Embodiment of the Invention

Referring to Figs. 4(a), 5(a) and 6 a detailed discussion regarding the retranslate bypass operation of the preferred embodiment of the Invention is now discussed. Referring to Figs. 5 and 6 the steps performed at 144, 146, 148 and 150 (Fig. 5) are identical to the steps performed at 156, 158, 160 and 162 (Fig. 6) of the bypass operation. More particularly, the TLB is searched for a particular virtual address to physical address (156, Fig. 6) translation, a miss occurs (158, Fig. 6), a multiple cycle table walk locates the virtual address to the physical address translation (160, Fig. 6) and the CAM 12 and RAM 22 are updated (162, Fig. 6) with a virtual address and a page address (along with the miscellaneous bits) respectively.

While the update operation (162, Fig. 6) occurs however, the physical address is obtained and transferred to the Physical Address Bus 128. More particularly while the virtual address is on bus 76 (Fig. 4) and the page address is on the update data bus 78 (Fig. 4), the page address is transferred over bus 78 to a bypass bus 130 onto Internal Bus 120 and then to bus 122 where the physical address is gated the Output MUX 124. The Output MUX 124 combines the lower order 12 bits of the virtual address provided by the Virtual Address Bus 76 and bus 125 with the high order bits of the page address to form the physical address which drives the Physical Address Bus 128. By directly sending the page address obtained from main memory to the Output MUX 128, without waiting for the TLB to update the RAM with a page address and retranslate the virtual address (150, 152 (Fig. 5)), an entire clock cycle is saved. The bypass operation increases performance over the conventional design shown in Figs. 2(a) and 5 enhances the overall system performance.

The invention has been described in an exemplary and preferred embodiment, but it is not limited thereto. Those skilled in the art will recognize that a number of additional modifications and improvements can be made to the invention without departure from its essential spirit and scope. The scope of the invention should only be limited by the following set of claims.

## Claims

1. An apparatus for translating virtual addresses to physical addresses of main memory, said main memory including a plurality of pages, each said page of said main memory corresponding to a page address and said apparatus for determining whether the request for said translation has sufficient access privilege to access said page associated with said page address, said apparatus comprising:
content addressable memory means for storing a plurality of said virtual addresses, said content addressable memory including a plurality of entries and each said entry containing one of said virtual addresses,
random access memory means for storing a plurality of said page addresses, said random access memory means including a plurality of entries, each entry of said random access memory means containing one of said page addresses and access privilege information, said access privilege information for denoting the level of access privilege required for obtaining said page address stored in said random access memory entry, and each entry of said random access memory corresponding to an entry of said content addressable memory, and
associated with each entry of said content addressable memory means and associated with each said corresponding entry of said random access memory means, means for performing a predetermined logic function for comparing said access privilege for one of said pages of said main memory with said request access privilege for determining whether said requested access privilege is sufficient for accessing said page associated with said page address and means for combining said page address with said virtual address to obtain said physical address, and means for obtaining, in parallel to said means obtaining said physical address, said determination of whether said requested access privilege is sufficient for accessing said page.

2. A method for translating virtual addresses of a main memory to physical addresses of said main memory, said main memory including a plurality of pages, each said page of said main memory corresponding to a page address, said virtual addresses stored in a content addressable memory, said content addressable memory including a plurality of entries and each said entry containing one of said virtual addresses, said page addresses stored in a random access memory, said random access memory including a plurality of entries, each entry of said random access memory containing one of said page addresses and access privilege information associated with said page address, said access privilege information for denoting the level of access privilege required for accessing said page address stored in said random access memory entry, each entry of said random access memory corresponding to an entry of said content addressable memory, associated with each entry of said content addressable memory and associated with each said corresponding entry of said random access memory, means for performing predetermined logic functions for comparing the access privilege for one of said pages of said main memory with a request access privilege for determining whether said request is sufficient for accessing said page of said main memory associated with said corresponding page address of said random access memory, said method comprising the steps of:
comparing the contents of said content addressable memory with said virtual address to be translated in order to determine which entry of said content addressable memory, if any, matches said virtual address,
in parallel to said step of comparing the contents of said content addressable memory with said virtual address, obtaining the access privilege information, if any, associated with each entry of said random access memory, and said step for obtaining the access privilege information including the step of comparing the access privilege for each of said entries with the request access privilege for determining whether the requested access privilege is sufficient for accessing the page associated with the page address,

selecting a random access memory entry associated with said matched entry of said content addressable memory,

in parallel to said step of selecting said random access memory entry, selecting said means for performing said predetermined logic function associated with said matched entry of said content addressable memory and said corresponding entry of said random access memory, and

combining said page address with said virtual address to obtain said physical address, in parallel to said step for combining, obtaining from said selected predetermined logic function said determination of whether said requested access privilege is sufficient for accessing said page.

3. A method for efficiently providing a translation for a virtual address to a physical address of a main memory, said translation performed by a translation look aside buffer, said translation look aside buffer including a content addressable memory for storing a plurality of said virtual addresses, a random access memory for storing a plurality of page addresses, a virtual address bus for updating said content addressable memory with said virtual addresses and an update data bus for updating the random access memory with said page addresses, said virtual address bus and said update bus combined by an output multiplexer, said method comprising the steps of:

operative when said translation does not produce said physical address, updating the content addressable memory with said virtual address to be translated and updating said random access memory with said page address corresponding to said virtual address,

said step of updating said content addressable memory and said random access memory including the step of sending said virtual address on said virtual address bus and said page address on said update data bus to said output multiplexer and combining said virtual address with said page address to produce said physical address.

4. A translation look aside buffer for efficiently providing translation for a virtual address to a physical address of a main memory, said translation look aside buffer comprising:

a content addressable memory for storing a plurality of said virtual addresses,

a random access memory for storing a plurality of page addresses,

a virtual address bus for updating said content addressable memory with said virtual addresses and an update data bus for updating the random access memory with said page addresses, said virtual address bus and said update data bus combined by an output multiplexer, said multiplexer for combining said page address with said virtual address to produce said physical address.

# fig. 1.
## PRIOR ART
## TYPICAL EXCEPTION DETECTION

COMPARE CAM — 60
SELECT RAM — 62
READ RAM — 64
DETERMINE EXCP. — 66
DRIVE EXCP. — 68

# fig. 2c.

|  | 8 | 7 | 6 | 5 | 4 | 3 | 2 | 1 | 0 |
|---|---|---|---|---|---|---|---|---|---|
| PAGE ADDRESS |  | C | M |  |  |  |  |  | V |

ACC[2:0]   ST[1:0]

MISC.

RAM ENTRY

# fig. 3.
## PARALLEL EXCEPTION DETECTION

COMPARE CAM
DETERMINING PARALLEL EXCP. — 70
SELECT RAM
SELECT EXCP. — 72
READ RAM
DRIVE EXCP. — 74

## fig. 2a.
### PRIOR ART

VIRT. ADDR BUS W=32 — 4

UPDATE DATA BUS 8 — W=32

2

6 — DECODE 14 — 18

DECODE 20 — 10 — 22

12 — CAM (64 ENTRIES)

CAM HIT W=64 — 16

DECODE & HIT CNTL UNIT FIG. 2b

RAM (64 ENTRIES)

CACHEBLE, MODIFIED, ST[1:0] VALID, & — 24
ACC[2:0] — 26

52 — 28

30

CNTL. IN

MAIN CONTROL & EXCEPTION CONTROL

32 — PRIV
34 — PROT
36 — HIT

INTERNAL BUS W=32 — 7

40 — 44

OUTPUT MUXING — 38
42

PHYS. ADDR. BUS W=36

46

48

54 — 56 — 58

TO CAM ROW SELECT

| CAM WORD SELECT LOGIC UNIT | HIT DETERMINATION LOGIC UNIT | RAM WORD SELECT LOGIC UNIT |

TO RAM ROW SELECT

BLOWUP OF EXCEPTION, DECODE, & HIT CONTROL LOGIC. There is one row of logic associated with each word of RAM and CAM. Exception conditions for all 64 RAM words are determined in parallel. Then, the exceptions are selected at the same time that the RAM word is selected. Previous implementations determine exceptions after the RAM word has been selected.

12 — CAM (64 ROWS)

DECODE & HIT CONTROL LOGIC UNIT

22 — RAM (64 ROWS)

18

## fig. 2b.
### PRIOR ART

12

FIG. 4a.

132 — CAM WORD SELECT LOGIC UNIT

134 — EXCEPTION DETERMINATION LOGIC UNIT

136 — HIT DETERMINATION LOGIC UNIT

138 — RAM WORD SELECT LOGIC UNIT

TO CAM ROW SELECT

TO RAM ROW SELECT

BLOWUP OF EXCEPTION, DECODE, & HIT CONTROL LOGIC. There is one row of logic associated with each word of RAM and CAM. Exception conditions for all 64 RAM words are determined in parallel. Then, the exceptions are selected at the same time that the RAM word is selected. Previous implementations determine exceptions after the RAM word has been selected.

CAM (64 ROWS)

EXCEPTION, DECODE & HIT CONTROL LOGIC UNIT  100

RAM (64 ROWS)

92

84

88

fIG.4b.

**FIG.5**
PRIOR ART

TYPICAL UPDATE TIMING

142
CLK

TRANSLATE
144

MISS
146

TABLE
WALK (MULT. CYCLES)
148

UPDATE
150

RE-TRANSLATE
152

PHYS
ADDR
AVAIL.
154

**FIG.6.**

BYPASS TIMING

142
CLK

TRANSLATE
156

MISS
158

TABLE
WALK (MULT. CYCLES)
160

UPDATE
162

BYPASS
164

PHYS.
ADDR
AVAIL.
166